(19) Europäisches Patentamt
European Patent Office
Office européen des brevets

(11) EP 1 661 923 A1

(12) # EUROPEAN PATENT APPLICATION

published in accordance with Art. 158(3) EPC

(43) Date of publication:
**31.05.2006 Bulletin 2006/22**

(21) Application number: **04772078.4**

(22) Date of filing: **24.08.2004**

(51) Int Cl.:
*C08F 20/20* (1974.07) *C08F 20/28* (1974.07)
*C08F 290/06* (1995.01) *G11B 7/24* (1968.09)

(86) International application number:
**PCT/JP2004/012117**

(87) International publication number:
**WO 2005/019282 (03.03.2005 Gazette 2005/09)**

(84) Designated Contracting States:
**CH DE FR GB LI**

(30) Priority: **26.08.2003 JP 2003300930**

(71) Applicant: **NIPPON KAYAKU KABUSHIKI KAISHA**
**Tokyo 102-8172 (JP)**

(72) Inventors:
- **TOKUDA, Kiyohisa**
  **Sitama-shi,**
  **Saitama 338-0001 (JP)**
- **ISHII, Kazuhiko**
  **Kawagoe-shi,**
  **Saitama 350-1108 (JP)**
- **MIZUTANI, Go**
  **Saitama-shi,**
  **Saitama 338-0001 (JP)**
- **MIYAKE, Takeo,**
  **NIPPON KAYAKU**
  **Tokyo 115-0042 (JP)**

(74) Representative: **Gille Hrabal Struck Neidlein Prop Roos**
**Brucknerstrasse 20**
**40593 Düsseldorf (DE)**

(54) **ULTRAVIOLET-CURING RESIN COMPOSITION AND CURED PRODUCT THEREOF**

(57) The present invention enables to provide a highly durable protective coating film or adhesive layer for high-density optical disks with less warp, which is superior in transmission for blue lasers, transparency and low water-absorption, by using an ultraviolet-curing resin composition essentially comprising a compound (A) represented by the following general formula (I), [Chemical Formula 7], (wherein, R represents each independently a hydrogen atom or a C1-C3 alkyl group, and n and m each represents the number of repetition from 0 to 5) and a photopolymerization initiator.

EP 1 661 923 A1

## Description

### Technical Field

The present invention relates to an ultraviolet-curing resin composition, a cured product thereof, and an optical disk having said cured product.

### Background Art

As general optical disk recording media in practical use at present, there are CD (compact disk), MO (magnetic optical disk), CD-R (recordable type), CD-RW (rewritable type) and the like. These media are composed of a 1.2 mm thick polycarbonate substrate, a recording film and a reflection film each formed thereon, and a protection film made of an ultraviolet-curing coating agent provided thereon to protect these films from external factors. In addition, for further increase of memory capacity of recording media such as DVD-R, DVD-RW, DVD-RAM, DVD+R and DVD+RW, in which problems such as birefringence of the polycarbonate substrate and requirement for smaller diameter of laser spot have been solved by reducing thickness of the polycarbonate to 0.6 mm, a half of the existing thickness, and laminating two of these substrates, and these solutions for recording media have recently been in practical use. All of these media are composed of a 0.6 mm thick polycarbonate substrate, a recording film, a reflection film and the like formed thereon, an adhesive layer to laminate two substrates and a protection layer provided at the uppermost position for the purpose of protection in the same manner to the above. As the adhesive layer and the protection layer, cured products of ultraviolet-curing resins are used.

However, as a recording medium corresponding to the large capacity data storage for coming digital broadcasting age, such DVD recording media are not sufficient in capacity. For this reason, as a high-density optical disk for the next generation, an optical disk has been proposed (see Patent Reference 1) and in practical use, in which a recording layer and a 100 μm thick transparent cover layer are laminated on a substrate, and writing and reading are carried out using blue laser beam not from the polycarbonate substrate side but from the transparent cover layer side.

A method for forming the cover layer covering the recording layer of this optical disk includes a method of laminating a 100 μm thick transparent cover layer and a method of forming a 100 μm thick layer on the recording film with an ultraviolet-curing resin. And, a 2P method and a spin coating method have been proposed as the method for forming an ultraviolet-curing resin layer. As the ultraviolet-curing resin to be formed on the recording film, 2P agents such as the compositions described in, for example, Patent Reference 2, Patent Reference 3 and the like, have been proposed. Also, protective coating agents such as compositions in Patent Reference 4, Patent Reference 5 and the like have been proposed.

Patent Reference 1: JP-A-11-273147
Patent Reference 2: JP-A-5-059139
Patent Reference 3: JP-A-5-132534
Patent Reference 4: JP-A-3-131605
Patent Reference 5: JP-A-3-172358

### Disclosure of the Invention

### Problems to be solved by the Invention

The ultraviolet-curing resin disclosed in Patent Reference 1 has, however, an insufficient transmittance at the wavelength of 405 nm for blue lasers. Further, the using of these ultraviolet-curing resin compositions for a transparent cover layer of the high-density optical disks has such problems that a warp is generated due to a large shrinkage percentage on curing, and the warp becomes larger after durability test. Accordingly, the ultraviolet-curing resin composition, which can provide an ultraviolet-curing resin film having a higher transmittance at the wavelength region of blue lasers, a small shrinkage percentage on curing and giving less warp even in the high-density optical disks, has been demanded.

### Means to Solve the Problems

The present inventors have, after extensively studying to solve the above problems, found out a resin composition suitable to the above performances.
Namely, in an aspect of the present invention, the present invention relates to the following items (1) - (14).

(1) An ultraviolet-curing resin composition comprising a compound (A) represented by the following general formula

(I):

[Chemical Formula 1]

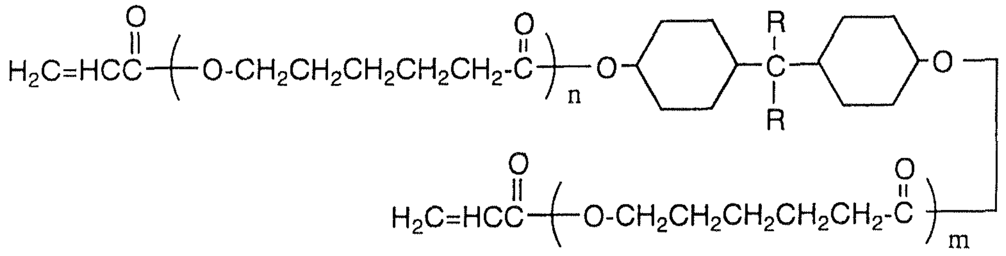

(I)

(wherein, R represents each independently a hydrogen atom or a C1-C3 alkyl group; and n and m each represents the number of repetition from 0 to 5); and a photo polymerization initiator (B).

(2) The ultraviolet-curing resin composition according to the above item (1), wherein a cured film of said resin composition has a light transmittance of not less than 60% at the wavelength of 405 nm when coated in a thickness of 100 μm (plus/minus 10 μm) and cured.
(3) The ultraviolet-curing resin composition according to the above item (1) or (2), wherein said polymerization initiator (B) contains at least one compound selected from a group consisting of:

1-hydroxy-cyclohexyl phenyl ketone;
2-hydroxy-2-methyl-1-phenylpropane-1-one;
2-methyl-[4-(methylthio)phenyl]-2-morpholino-1-propanone; and
2,4,6-trimethylbenzoyldiphosphine oxide.

(4) The ultraviolet-curing resin composition according to any one of the above items (1) - (3), wherein said resin composition also contains an ethylenically unsaturated compound (C) other than the component (A).
(5) The ultraviolet-curing resin composition according to the above item (4), wherein said ethylenically unsaturated compound (C) is an acrylate other than the component (A).
(6) The ultraviolet-curing resin composition according to the above item (5), wherein said acrylate other than the component (A) is an acrylate oligomer having a molecular weight of 400 - 10,000.
(7) The ultraviolet-curing resin composition according to the above item (5), wherein said acrylate oligomer is a urethane acrylate and/or an epoxy acrylate.
(8) The ultraviolet-curing resin composition according to any one of the above items (1) - (7), wherein said resin compound has a viscosity of 100 to 5,000 mPa·S measured using a type B viscometer at 25°C.
(9) The ultraviolet-curing resin composition according to any one of the above items (1) - (8), wherein said resin composition is used as a protective coating agent for an optical disk.
(10) A cured product obtainable by curing the resin composition according to any one of the above items (1) - (9).
(11) The cured product of the resin composition according to the above item (10), wherein said cured product has a water-absorption percentage (measured at 25°C) of not more than 2.0% and a shrinkage percentage on curing of not more than 6%.
(12) The cured product according to the above item (10) or (11), wherein said cured product has a transmittance of not less than 60% for blue lasers in a film thickness of 10 - 150 μm.
(13) An optical disk having a layer of the cured product according to any one of the the above items (10) - (12).
(14) The optical disk according to the above item (13), wherein said disk has a layer of the cured product on a side where recording light and/or reproducing light coming in.

Effect of the Invention

The ultraviolet-curing resin composition and the cured product thereof of the present invention are useful as a highly durable protective coating film and a coating agent therefore for high-density optical disks, which is excellent in

high transmission for blue lasers, transparency and low water-absorption and gives less warp. In particular, the resin composition and the cured product thereof are extremely suitable to optical disks, on which reading and/or writing are carried out using blue lasers.

Best Mode for Carrying Out the Invention

The present invention provides a resin composition, a protective coating agent and a cured product thereof, capable of forming a highly durable protective layer or an adhesive layer for high-density optical disks, which is, after curing, excellent in high transmission for blue lasers, low shrinkage on curing, as well as in transparency and low water-absorption, and also gives less warp. Further, the above composition can be applied, besides the above, to materials relating to optical applications such as optical fibers and optical switching elements. The present invention will be described more specifically hereinafter.

In the resin composition of the present invention, the compound (A) represented by the following general formula (I) contributes mainly to the low water-absorption performance and the low shrinkage performance. However, purpose of addition of the compound is not necessarily limited to these performances, but the compound may also be used for other purposes, for example, improvements in other properties of the cured product such as transmission for blue lasers, transparency, and hardness or flexibility, as well as improvements in properties of the resin composition itself such as stability and viscosity. The compound represented by the general formula (I) can be obtained by condensing a hydrogenated bisphenol compound, for example, such as hydrogenated bisphenol A, hydrogenated bisphenol F or hydrogenated bisphenol AF, with ε-caprolactone, followed by (meth)acrylation. In the present invention, the term "(meth)acrylate" and the like is to be understood to have the meaning of any one or both of methacrylate and acrylate.

[Chemical Formula 2]

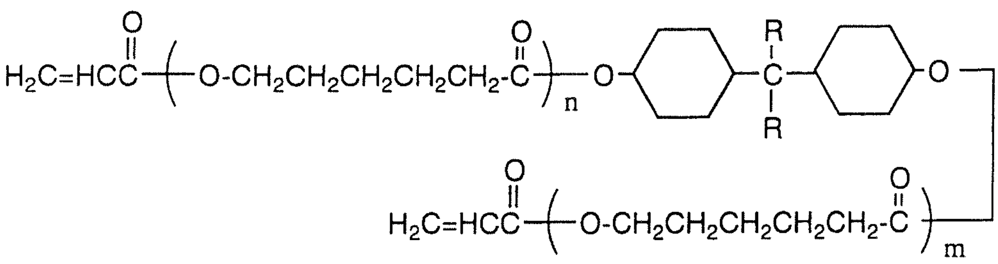

(I)

(wherein, R represents each independently a hydrogen atom or a C1-C3 alkyl group; and n and m each represents the number of repetition from 0 - 5).

The C1-C3 alkyl group of the present invention includes methyl group, ethyl group, propyl group and the like. Further, two R groups in the general formula (I) may be the same or different from each other.

Suitable R includes a hydrogen atom, a methyl group and the like, and when two R groups are different from each other, a preferable combination thereof is that of a hydrogen atom and a methyl group and the like.

Typical compounds of the compound (A) contained in the resin composition of the present invention may be obtained by reacting, for example, a hydrogenated bisphenol A [for the case when R is a methyl group in the general formula (I)] or a hydrogenated bisphenol F [for the case when R is a hydrogen atom in the general formula (I)], directly with (meth) acrylic acid, but can preferably be obtained by condensing any one of the above bisphenol compounds with ε-caprolactone followed by (meth)acrylation by reacting the resulting condensate with (meth)acrylic acid. The repetition numbers of ε-caprolactone condensation (n and m) may be optionally adjusted so that well-balance of viscosity, hardness, water-absorption, shrinkage and the like can be obtained. Adjustment of the repetition numbers of ε-caprolactone condensation can be performed by properly adjusting a molar ratio of ε-caprolactone to be reacted to the bisphenol compound. Further, a compound in which R is ethyl group, n-propyl group or i-propyl group, or two R groups are different from each other, can also be obtained using a corresponding bisphenol compound as a starting material in the similar manner to the above. In the resin composition of the present invention, the compound (A) obtained by using hydrogenated bisphenol A or hydrogenated bisphenol F as a starting material is preferable.

The repetition numbers of ε-caprolactone condensation (n, m) are each independently from 0 to 5, and preferably

from 0 to 3. Further, preferably n and m are not 0 in the same time. The repetition numbers of n and m are roughly determined by a molar ratio of ε-caprolactone to be used as a starting material to the bisphenol compound, and not necessarily be integers.

The content of the compound (A) in the resin composition is not particularly limited, so long as an amount of the compound (A) is enough to achieve the effect of the present invention. The content is usually in a range from around 5 to 98% by weight to the total weight of the resin composition, and in an aspect from around 10 to 96% by weight (hereinafter, % represents % by weight unless otherwise noted). To improve a low water-absorption performance and a low shrinkage performance, a higher content of the compound (A) is more desirable. The content of the compound (A) is not less than 20%, preferably not less than 30%, more preferably not less than 40% and particularly preferably not less than 50%. Upper limit of the content can be, in an aspect, around 99.5%, but practically around 97 or 98%.

The photo polymerization initiator (B) contained in the resin composition of the present invention for usual optical disks is not particularly limited, and includes, for example, 1-hydroxy-cyclohexyl phenyl ketone (for example, trade name: Irgacure 184; from Ciba Specialty Chemical), 2-hydroxy-2-methyl-1-phenylpropane-1-one (trade name: Darocure 1173; from Ciba Specialty Chemical), Irgacure 651 (trade name; from Ciba Specialty Chemical), 2-methyl-[4-(methylthio)phenyl]-2-morpholino-1-prapanone, 2-benzyl-2-dimethylamono-1-(4-morpholinophenyl)-butane-1-one, 2-chlorothioxanthone, 2,4-dimethylthioxanthone, 2,4-di-isopropylthioxanthone, isopropylthioxanthone, 2,4,6-trimethylbenzoyldiphosphine oxide and bis-(2,6-dimethoxybenzoyl)-2,4,4-trimethylpentylphosphine oxide. Since the transmittance for blue lasers is influenced by a kind of the initiator, when the initiator (B) having a superior transmission for blue lasers is required, it is recommended to select an initiator less absorbing blue lasers through a preliminary test in advance. Preferably, the photo polymerization initiator is selected, for example, by coating said resin composition containing a necessary amount of the initiator on a disk substrate or the like in a thickness of around 100 μm (plus/minus 10 μm), curing the resin composition, and measuring a transmittance at 405 nm. The transmittance at 405 nm is preferably not less than 60%, more preferably not less than 70% and further more preferably not less than 75%. Preferable initiators include, for example, 1-hydroxycyclohexyl phenyl ketone (for example, trade name: Irgacure 184), 2-hydroxy-2-methyl-1-phenylpropane-1-one (for example, trade name: Darocure 1173), 2-methyl-[4-(methylthio)phenyl]-2-morpholino-1-propanone and 2,4,6-trimethylbenzoyldiphosphine oxide. These photo polymerization initiators may be used alone or in combination of two or more kinds in an optional ratio. Further, these initiators may be used in combination with photo polymerization initiator auxiliaries such as amines.

The content of the photo polymerization initiator (B) in the resin composition is usually around 0.5 to 20%, preferably around 1 to 10%, more preferably around 2 to 10%, and further more preferably around 3 to 10%.

The photo polymerization initiator auxiliaries which may be used in the present invention includes, for example, diethanolamine, 2-dimethyl-amonoethyl benzoate, dimethyl-aminoacetophenone, ethyl p-dimethyl-aminobenzoate and isoamyl p-dimethylaminobenzoate. The content of the photopolymerization initiator auxiliary in the composition is around 0 to 5%. The auxiliary is not necessary used, but is preferably used in an amount of around 0.1 to 3% when used.

In the resin composition of the present invention, an ethylenically unsaturated compound (C) other than the above compound (A) can be contained.

Said ethylenically unsaturated compound (C) is not particularly limited so long as it is an ethylenically unsaturated compound, but preferably a (meth) acrylate compound other than the above compound (A), and includes, for example, a (meth)acrylate monomer and a (meth)acrylate oligomer. These compounds are properly used alone or in combination if necessary. Content of the component (C) can be in a range from 0 to 94.5% to the total weight of the resin composition. When the component (C) is used, the content is not less than 1%, preferably not less than 2%, and more preferably not less than 4%, and also not more than 88%, and preferably not more than 85%. When the content of other components are high, the content of the component (C) is not more than 78%, preferably not more than 58%, and more preferably not more than 48%, and may be, in an aspect, not more than 40% or not more than 30%.

The (meth)acrylate monomer as the ethylenically unsaturated compound (C) may be a monofunctional monomer having one (meth)acrylate group in a molecule or a polyfunctional monomer having two or more (meth) acrylate groups in a molecule. Such acrylate monomers include, for example, esters of a monovalent or a polyvalent alcohol, having around 1 to 30 carbon atoms, preferably around 1 to 15 carbon atoms, which may have a substituent such as a hydroxyl group, an alkoxyl group having around 1 to 15 carbon atoms, a phenyl group and a phenoxyl group, and (meth)acrylic acid. These monomers may be any of monofunctional monomers and polyfunctional monomers. When polyvalent alcohol is a polyvalent alcohol modified with a poly(C1-C5 alkyleneglycol) or a C2-C4 alkyleneoxide, total number of carbon atoms may exceed the above numbers. In this case, the number of repetition in the condensed chain of alkyleneglycol or C2-C4 alkyleneoxide is preferably around 1 to 4.

The monofunctional monomer having one (meth)acrylate group in a molecule includes, for example, lauryl acrylate, tricyclodecane (meth)acrylate, dicyclopentadieneoxy-ethyl (meth)acrylate, dicyclopentanyl (meth)acrylate, isoboronyl (meth)acrylate, adamanthyl (meth)acrylate, phenyloxyethyl (meth)acrylate, benzyl (meth)acrylate, tetrahydrofurfuryl (meth)acrylate, morpholine (meth)acrylate, phenylglycidyl (meth)acrylate, 2-hydroxyethyl (meth)acrylate, 2-hydroxypropyl (meth)acrylate and ethylcarbitol (meth)acrylate.

Further, the (meth) acrylate monomer (C) having two or more (meth)acrylate groups in a molecule includes, for example, neopentylglycol di(meth)acrylate, tricyclodecane-dimethylol di(meth)acrylate, hydroxypivalaldehyde-modified trimethylolpropne di(meth)acrylate, neopentylglycol hydroxypivalate di(meth)acrylate, polyethyleneglycol di(meth) acrylate, dicyclopentanyl di(meth)acrylate, 1,6-hexanediol di(meth)acrylate, polypropyleneglycol di(meth)acrylate, ethyleneoxide-modified bisphenol A di(meth)acrylate, ethyleneoxide-modified trimethylolpropane tri(meth)acrylate, ethyleneoxide-modified pentaerythritol tetra(meth)acrylate, tris{(meth)acryloxyethyl}isocyanurate and ethyleneoxide-modified di-pentaerythritol hexa(meth)acrylate.

These acrylate monomers may be used alone or in combination of two or more kinds in an optional ratio. The content of the acrylate monomer in the resin composition is in a range from 0 to 90% to the total weight of the composition. In an aspect, the content is 1 to 90% and preferably 2 to 85%, and in another aspect, the content is around 0 to 60% and preferably around 0 to 50%. Further in an aspect, the upper limit may be around 30% or around 40%.

The acrylate oligomer as the ethylenically unsaturated compound (C) includes, for example, an acrylate oligomer having a molecular weight of around 400 - 10,000, and specifically an urethane acrylate having a molecular weight of 400 - 10,000 and an epoxy acrylate having a molecular weight of 400 - 10,000 (the molecular weight means a weight average molecular weight determined by the light scattering method) . These oligomers may be used alone or in combination of both. A preferable effect may be achieved by containing said oligomers as the above component (C) in the resin composition. These oligomers can be contained in a range from 0 to 90% to the total weight of the resin composition. When these oligomers are contained, the content is not less than 1%, preferably not less than 2%, more preferably not less than 4%, and also not more than 90%, and preferably not more than 85%. Practically, the content is not more than 70%, preferably not more than 60%, and more preferably not more than 50%, and in an aspect, the content may be not more than 40%.

The urethane (meth) acrylate having a molecular weight of 400 - 10, 000 can be obtained by reacting the following polyvalent alcohols with an organic polyisocyanate and a hydroxyl(meth)acrylate compound.

The polyvalent alcohols include, (1) aliphatic polyols, preferably C1-C15 aliphatic polyols and more preferably C2-C12 aliphatic polyols, for example, alkyleneglycols such as neopentylglycol, 3-methyl-1,5-pentanediol, ethyleneglycol, propyleneglycol, 1,4-butanediol and 1,6-hexanediol, and other aliphatic alcohols such as trimethylolpropane, pentaerythritol, tricyclodecanedimethylol, bis-(hydroxymethyl)cyclohexane; (2) polyester polyols obtained by reacting the above aliphatic polyols with polybasic acids, preferably C3-C12 polybasic acids (for example, succinic acid, phthalic acid, hexahydrophthalic anhydride, terephthalic acid, adipic acid, azelaic acid and tetrahydrophthalic anhydride); (3) caprolactone alcohols, obtained by reacting the above aliphatic polyols and ε-caprolactone, and polycarbonate polyols (for example, polycarbonatediols obtained by reacting the above aliphatic polyols such as 1, 6-hexanediol with diphenylcarbonate) ; and (4) polyether polyols, which include poly(C1-C6)alkyleneglycols such as polyethyleneglycol, polypropyleneglycol and polytetramethyleneglycol, and ethyleneoxide-modified bisphenol compounds such as ethyleneoxide-modified bisphenol A.

The organic polyisocyanates include, compounds in which a hydrocarbon residue of C1-C20, preferably C6-C15, is bonded with two or more, preferably 2 to 4 isocynanate groups, specifically, for example, isophoronediisocyanate, hexamethylenediisocyanate, trylenediisocyanate, xylenediisocyanate, diphenylmethane-4,4'-diisocyanate and dicyclopentanylisocyanate.

The hydroxy(meth)acrylate compounds include, hydroxy-substituted C1-C15 hydrocarbon (meth)acrylates, preferably hydroxy-substituted C2-C10 hydrocarbon (meth)acrylates, for example, hydroxylethyl (meth)acrylate, hydroxypropyl (meth)acrylate, hydroxybutyl (meth)acrylate, dimethylolcyclohexyl mono-(meth)acrylate and hydroxycaprolactone (meth)acrylate.

The content of the urethane (meth)acrylate having a molecular weight of 400 - 10,000 is 0 to 90% to the total weight of the resin composition, and the content is, when contained, 1 - 90%, and preferably 2 - 85%. Further, the content described as a content of the above oligomer can be also applied for this compound as it is.

The epoxy acrylate having a molecular weight of 400 - 10,000 used in the resin composition of the present invention is not particularly limited, preferably a bisphenol type epoxy acrylate is used, and includes, for example, epoxy acrylates obtained by reacting bisphenol A type epoxy resins such as epicoat 802, 1001 and 1004, or bisphenol F type epoxy resins such as epicoat 4001P, 4002P and 4003P, (these epoxy resins are made by from Japan Epoxy Resins Co., Ltd.), with (meth)acrylic acid. Further, alicyclic epoxy acrylates obtained by hydrogenating the above may be used. Content of the bisphenol type epoxy acrylate having a molecular weight of 400 - 10,000 is in a range from 0 to 90% relative to whole said resin composition, and the content is, when contained, 1 to 90% by weight, and preferably 2 to 85% by weight. And the content described as a content of the above oligomer can also be applied for this compound as it is.

In the resin composition of the present invention, polycarbonate type, polyacrylate type, polyurethane type and polyvinyl type resins may be contained as a high polymer, if necessary. Further, additives such as organic solvents, silane coupling agents, polymerization inhibitors, leveling agents, photo stabilizers, antioxidants, antistatic agents, surface lubricants and fillers can be used in combination. Contents of these additives are in a range from 0 to 30%, and preferably from 0 to around 10% to the total weight of the resin composition.

The resin composition of the present invention can be obtained by mixing and dissolving all components at 20

- 80°C according to a common method. Further, the cured product of the present invention can be obtained by irradiating light such as ultraviolet rays and visible rays to the resin composition according to a common method.

Next, an example of the preferable resin composition of the present invention will be described below.

Compound A: 5 - 99.5%, preferably 20 - 98%, more preferably 40 - 98%, and further more preferably 50 - 98%;

Photo polymerization initiator (B): 0.5 - 20% and preferably 2 - 10%;

Compound (C): 0 - 94.5%, preferably 0 - 78%, more preferably 0 - 58%, and further more preferably 0 - 48%.

In the above composition, when the compound (C) is contained, a preferable combination of the compound (A) and the compound (C) is as follows. The compound (A) is the compound represented by the general formula (I) obtained using bisphenol A or bisphenol F as a starting material, and the compound (C) contains at least an acrylate oligomer in an amount not more than 48%. In this case, an additional acrylate monomer may be further contained as the compound (C).

In the photo-irradiation curing of the resin composition of the present invention, light source is not particularly limited so long as the lamp radiates ultraviolet to near ultraviolet rays. The lamp includes, for example, a low pressure, a high pressure or an ultra-high pressure mercury lamp, a metal halide lamp, a (pulse) xenon lamp and an electrodeless lamp.

The viscosity of the resin composition of the present invention is preferably 100 - 5,000 mPa·S, and more preferably 200 - 3,000 mPa·S, measured using a type B viscometer at 25°C. Further, in the resin composition of the present invention, preferably shrinkage percentage on curing is not more than 6%, preferably not more than 5.5%, and water-absorption percentage (measured at 25°C) of the cured product is not more than 2.0%, preferably not more than 1.5%, and more preferably not more than 1.2%.

The resin composition of the present invention can be used as a protective coating agent, in particular, for optical disks. When a protective coating layer is formed using the resin composition, preferably the resin composition is coated so that a film thickness becomes 10 - 150 μm, generally 50 - 100 μm, and coating method is not particularly limited. The common coating methods include spin coating method, 2P method, roll coating method and screen printing method.

The optical disk having the cured product of the resin composition in the present invention is the one having the cured product of the resin composition usually as an adhesive layer, a protective film (layer) or the like. The optical disk can be obtained generally by forming a recording film, a reflection film and the like on a substrate followed by coating the resin composition in the uppermost position in a thickness of preferably 10 - 150 μm, then curing said resin composition layer by the above method to form a protective film, or in the case of the optical disks in which two substrates are laminated together, by forming further an adhesive layer for laminating two substrates besides the above protection film using the resin composition, then curing said layer. Further, in the case of the next generation high-density optical disks, the disks can be obtained by forming a cover layer for covering the recording layer using the resin composition, then curing said layer, or by forming a protective layer, then curing said layer in the similar manner to the above. Formation of the cover layer or the protection layer may be performed by coating the resin composition at the place where these layers are to be formed by the common method, then curing said layer.

Since reading and/or writing on the next generation high-density optical disks is carried out using blue lasers of around 400 nm, light transmittance at around 380 - 500 nm of the cured product film with a thickness of 10 - 150 μm is preferably not less than 60%, more preferably not less than 70%, and further more preferably not less than 75%. In particular, when the film of the composition of the present invention is formed in a thickness of 100 μm plus/minus 10 μm, the above transmittance at the wavelength of 405 nm is most preferable.

Further, in the optical disks of the present invention, the cured product layer of the ultraviolet-curing resin composition is suitably provided on the side where recording light and/or reproducing light coming in.

Hereinafter, the present invention is further illustrated more specifically through Synthesis Examples and Examples.

Synthesis Example 1

In a reactor equipped with a reflex condenser, a stirrer, a thermometer, a temperature regulator and a water separator, 113.44 g of the condensate obtained from hydrogenated bisphenol A and ε-caprolactone (molar ratio 1:1), 56.2 g of acrylic acid, 2.8 g of sulfuric acid, 0.84 g of hydroquinone, 157.5 g of toluene and 67.5 g of cyclohexane were placed. The mixture was allowed to react at the reaction temperature of 95 to 105°C, while water formed was removed by azeotropic distillation together with the solvent. The reaction was quenched when water formed was reached 11 ml. The reaction mixture was dissolved in mixed solvents of 140 g of toluene and 60 g of cyclohexane, neutralized with a 25% sodium hydroxide aqueous solution, followed by washing with 50 g of 15% saline 3 times. Evaporation of the solvents under reduced pressure afforded 151 g of transparent liquid having the following structural formula (A-1):

[Chemical Formula 3]

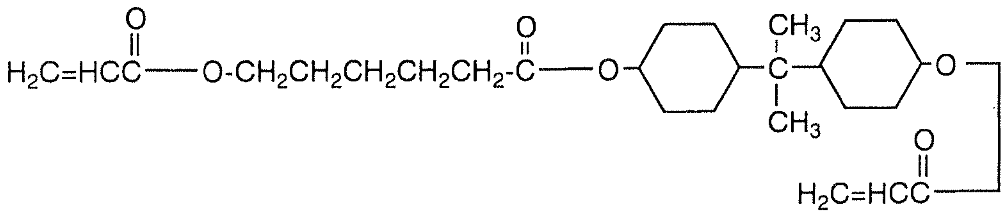

(A-1)

Synthesis Example 2

In a reactor equipped with a reflex condenser, a stirrer, a thermometer, a temperature regulator and a water separator, 14 9. 97 g of the condensate obtained from hydrogenated bisphenol A and ε-caprolactone (molar ratio 1:2), 56.2 g of acrylic acid, 2.8 g of sulfuric acid, 0.84 g of hydroquinone, 157. 5 g of toluene and 67.5 g of cyclohexane were placed. The mixture was allowed to react at the reaction temperature of 95 to 105°C, while water formed was removed by azeotropic distillation together with the solvent. The reaction was quenched when water formed was reached 11 ml. The reaction mixture was dissolved in mixed solvents of 140 g of toluene and 60 g of cyclohexane, neutralized with a 25% sodium hydroxide aqueous solution, followed by washing with 50 g of 15% saline 3 times. Evaporation of the solvents under reduced pressure afforded 186 g of transparent liquid having the following structural formula (A-2):
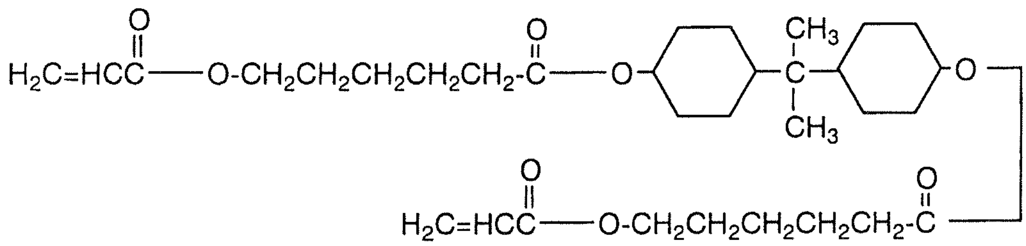

(A-2)

Synthesis Example 3

In a reactor equipped with a reflex condenser, a stirrer, a thermometer, a temperature regulator and a water separator, 141. 01 g of the condensate obtained from hydrogenated bisphenol F and ε-caprolactone (molar ratio 1:2), 56.2 g of acrylic acid, 2.8 g of sulfuric acid, 0. 84 g of hydroquinone, 157.5 g of toluene and 67.5 g of cyclohexane were placed. The mixture was allowed to react at the reaction temperature of 95 to 105°C, while water formed was removed by azeotropic distillation together with the solvent. The reaction was quenched when water formed was reached 11 ml. The reaction mixture was dissolved in mixed solvents of 140 g of toluene and 60 g of cyclohexane, neutralized with a 25% sodium hydroxide aqueous solution, followed by washing with 50 g of 15% saline 3 times. Evaporation of the solvents under reduced pressure afforded 177 g of transparent liquid having the following structural formula (A-3):
[Chemical Formula 5]

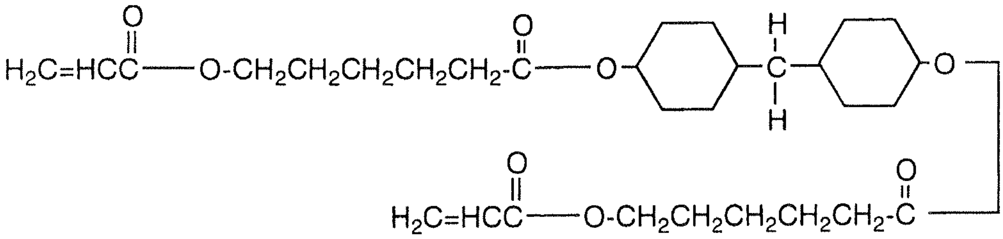

(A-3)

Examples

Examples 1 - 6 and Comparative Examples 1 - 2

The following Examples and Comparative Examples were conducted using the compounds obtained in the above Synthesis Examples 1 - 3. The term, parts, in Table 1 means parts by weight. The ultraviolet-curing resin compositions consisting of the compositions shown in Table 1 were prepared by the common method (mixing by stirring).

[Table 1]

Table 1

| | Example 1 | Example 2 | Example 3 | Example 4 | Example 5 | Example 6 |
|---|---|---|---|---|---|---|
| Component (A) (Part) | | | | | | |
| A-1 | 100 | | | | 80 | 80 |
| A-2 | | 100 | | 80 | | |
| A-3 | | | 100 | | | |
| Component (A) (Part) | | | | | | |
| UX-6101 | | | | | 20 | |
| UX-0937 | | | | 20 | | |
| R-115 | | | | | | 20 |
| R-604 | | | | | | |
| PEG-400DA | | | | | | |
| LA | | | | | 10 | 10 |
| Component (B) (Part) | | | | | | |
| Irgacur 184 | 5 | 5 | 5 | | 5 | |
| Darocure 1173 | | | | 5 | | 5 |
| BP-100 | | | | | | |
| EPA | | | | | | |
| Viscosity (mPa・S/25℃) | 2700 | 1300 | 425 | 3200 | 2000 | 1600 |
| Shrinkage rate (%) | 4.7 | 4.5 | 5.3 | 4.3 | 4.9 | 5.0 |
| water-absorption rate (%) | 0.5 | 0.5 | 0.5 | 0.6 | 0.8 | 1.0 |
| Transmittance (%) rate (%) | 80 | 78 | 82 | 80 | 82 | 78 |
| warp | ○ | ○ | ○ | ○ | ○ | ○ |
| Duration | ○ | ○ | ○ | ○ | ○ | ○ |

Table 1

| | Comparative Example 1 |
|---|---|
| Component (A) (Part) | |
| A－1 | |
| A－2 | |
| A－3 | |
| Component (A) (Part) | |
| UX－6101 | 50 |
| UX－0937 | |
| R－115 | |
| R－604 | |
| PEG－400DA | 50 |
| LA | |
| Component (B) (Part) | |
| Irgacur 184 | |
| Darocure 1173 | |
| BP－100 | 50 |
| EPA | 3 |
| Viscosity (mPa・S/25℃) | 2000 |
| Shrinkage rate (%) | 6. 7 |
| water-absorption rate (%) | 3. 1 |
| Transmittance (%) rate (%) | 70 |
| warp | × |
| Duration | × |

The abbreviation for each component shown in the table means as described below.
UX-6101: polyester type urethane acrylate (molecular weight: 2,700 ± 500), from Nippon Kayaku K.K.;
UX0937: polyether type urethane acrylate (molecular weight: 1,500 ± 500), from Nippon Kayaku K.K.;
R-115: bisphenol A type epoxy acrylate (molecular weight: 550 ± 100), from Nippon Kayaku K.K.;
R-604: hydroxylpivaric aldehyde-modified trimethylolpropane di(meth)acrylate, from Nippon Kayaku K.K.;
PEG-400DA: polyethyleneglycol diacrylate, from Nippon Kayaku K.K.;
LA: lauryl acrylate, from Nippon Oil & Fat Corp.;

Irgacure 184: 1-hydroxycyclohexyl phenyl ketone, photo polymerization initiator from Ciba Specialty Chemicals Inc.;
Darocure 1173: 2-hydroxy-2-methyl-1-phenylpropane-1-one, photo polymerization initiator from Ciba Specialty Chemicals Inc.;
BP-100: benzophenone, from Nippon Kayaku K.K.; and
EPA: 4-dimethylaminoethyl benzoate, from Nippon Kayaku K.K.

Viscosity in the present invention is based on the value measured using a type B viscometer.
Shrinkage percentage in the present invention is defined as the value calculated from specific gravity of liquid ($SG_1$) before curing at 25°C and specific gravity of film ($SG_f$) at 25°C obtained by curing according to the following numerical formula (1) :

(Numerical Formula 1)

$$\text{Shrinkage rate} = \frac{(SG_f - SG_l)}{SG_f} \times 100 \qquad (1)$$

Water-absorption percentage in the present invention is defined as the value obtained according to the method based on JIS K-7209, Clause 7.2.1. That is, a sample of cured film is cut out in an amount of about 0.5 g, and weighed in an unit of 0.1 mg (the weight is denoted as ml) . The test piece is dipped in distilled water at 23°C plus/minus 1°C for 24 hours. After that, the test piece is taken out from the water, and weighed in an unit of 0.1 mg within one minute after wiping surface water off with Kim Wipe (the weight is denoted as m2). Water-absorption percentage is calculated according to the following formula:

$$\text{Water-absorption rate} = \frac{(m2 - m1)}{m1} \times 100$$

m1: Initial weight of the test piece
m2: Weight of the test piece after dipping

In the ultraviolet-curing resin composition of the present invention, preferably shrinkage percentage on curing is not more than 6%, and water-absorption percentage of cured product (measured at 25°C) is not more than 2.0%.
Further, measurement of transmittance was performed by coating the resin on a polycarbonate substrate in a thickness of 100 ± 10 μm by spin coating, curing the resin by UV, then measuring a transmittance at the wavelength of 405 nm using the polycarbonate substrate as a reference.
In relation to Example 2, a cured product was obtained in the same manner as in Example 2 except that Irgacure 651 instead of Irgacure 184 was used, and transmittance of the cured product was measured at the wavelength of 405 nm to obtain a transmittance as low as 50%, which was insufficient to be used for blue laser optical disks.
Transmittance of a cured film was obtained as follows. Providing that:

T1: transmittance of a blank polycarbonate substrate;
T2: transmittance of a polycarbonate substrate with cured film, then,

$$\text{Transmittance of cured film (\%)} = 100 -( T2 / T1 )$$

In the present invention, warp was evaluated using a DVD substrate, which was sputtered with aluminum. Each of the compositions shown in Table 1 was coated on an aluminum-sputtered DVD substrate using a spin coater to form a coated layer with an average thickness of 100 μm. The coated layer was cured with an UV irradiator (CS-30L from Nippon Denchi Co., Ltd., 80w/cm high pressure mercury lamp) set at a lamp height of 10 cm, in an energy amount of 1,000 mJ/$cm^2$ in integrated light quantity. The test pieces obtained were allowed to stand for 24 hours, then a warp was

evaluated on a glass plate, according to the following criteria:

○ warp is hardly observed;
Δ when one side of the test piece is held by a finger, the other side is lifted up by not higher than 2 mm;
× when one side of the test piece is held by a finger, the other side is lifted up by not lower than 5 mm.

In the present invention, durability was evaluated using the test pieces used for warp evaluation after standing in the circumstance of 80°C and 85% R.H. for 500 hours, by visual examination on a state of reflection film according to the following criteria:

○ no change is observed on a reflection film since just after adhering;
Δ discoloring or pin holes are observed a little on a reflection film;
× discoloring or pin holes are observed significantly on a reflection film.

The ultraviolet-curing resin composition and cured product thereof of the present invention enable to provide a highly durable protective coating agent and cured product thereof for high-density optical disks, which is superior in transparency and low water absorption and gives less warp, and extremely useful for optical disks on which reading and/or writing is carried out using blue lasers.

Industrial Applicability

The ultraviolet-curing resin composition and cured product thereof are provided mainly for protective coating agent and cured product thereof for optical disks, and can be further applied to materials relating to optical applications such as optical fibers and optical switching elements

**Claims**

1. An ultraviolet-curing resin composition comprising a compound (A) represented by the following general formula (I): [Chemical Formula 6] (wherein, R represents each independently a hydrogen atom or a C1-C3 alkyl group, and n and m each represents the number of repetition from 0 to 5); and a photo polymerization initiator (B).

2. The ultraviolet-curing resin composition according to claim 1, wherein a cured film of said resin composition has a light transmittance of not less than 60% at the wavelength of 405 nm when coated in a thickness of 100 μm (plus/minus 10 μm) and cured.

3. The ultraviolet-curing resin composition according to claim 1 or 2, wherein said photo polymerization initiator (B) contains at least one compound selected from a group consisting of:

    1-hydroxycyclohexyl phenyl ketone;
    2-hydroxy-2-methyl-1-phenylpropane-1-one;
    2-methyl-[4-(methylthio)phenyl]-2-morpholino-1-propanone; and
    2,4,6-trimethylbenzoyldiphosphine oxide.

4. The ultraviolet-curing resin composition according to any one of claims 1-3, wherein said resin composition contains an ethylenically unsaturated compound (C) other than the component (A).

5. The ultraviolet-curing resin composition according to claim 4, wherein said ethylenically unsaturated compound (C) is an acrylate other than the component (A).

6. The ultraviolet-curing resin composition according to claim 5, wherein said acrylate other than the component (A) is an acrylate oligomer having a molecular weight of 400 - 10, 000.

7. The ultraviolet-curing resin composition according to claim 6, wherein said acrylate oligomer is a urethane acrylate and/or an epoxy acrylate.

8. The ultraviolet-curing resin composition according to any one of claims 1 - 7, wherein said resin composition has a viscosity of 100 to 5,000 mPa·S measured using a type B viscometer at 25°C.

**9.** The ultraviolet-curing resin composition according to any one of claims 1 - 8, wherein said resin composition is used as a protective coating agent for optical disks.

**10.** A cured product obtainable by curing the resin composition according to any one of claims 1 - 9.

**11.** The cured product of the resin composition according to claim 10, wherein said cured product has a water-absorption percentage (measured at 25°C) of not more than 2.0% and a shrinkage percentage on curing of not more than 6%.

**12.** The cured product according to claim 10 or 11, wherein said cured product has a transmittance of not less than 60% for blue lasers in a film thickness of 10 - 150 μm.

**13.** An optical disk having a layer of the cured product of an ultraviolet-curing resin composition according to any one of claims 10 - 12.

**14.** The optical disk according to claim 13, wherein said disk has a layer of the cured product on a side where recording light and/or reproducing light coming in.

## INTERNATIONAL SEARCH REPORT

International application No.
PCT/JP2004/012117

A. CLASSIFICATION OF SUBJECT MATTER
Int.Cl[7] C08F20/20, C08F20/28, C08F290/06, G11B7/24

According to International Patent Classification (IPC) or to both national classification and IPC

B. FIELDS SEARCHED

Minimum documentation searched (classification system followed by classification symbols)
Int.Cl[7] C08F20/20, C08F20/28, C08F290/06, G11B7/24

Documentation searched other than minimum documentation to the extent that such documents are included in the fields searched

Electronic data base consulted during the international search (name of data base and, where practicable, search terms used)
CA, REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2000-212127 A (Nippon Kayaku Co., Ltd.), 02 August, 2000 (02.08.00), Claims; Par. Nos. [0011], [0013] to [0018], [0023] (Family: none) | 1-8,10,12 |
| X | JP 2-258814 A (New Japan Chemical Co., Ltd.), 19 October, 1990 (19.10.90), Claims; page 3, lower left column, lines 3 to 12; page 3, lower right column, line 8 to page 4, upper left column, line 18 (Family: none) | 1-8,10,12 |

[X] Further documents are listed in the continuation of Box C.　　[ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 November, 2004 (02.11.04) | 22 November, 2004 (22.11.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No. PCT/JP2004/012117

C (Continuation). DOCUMENTS CONSIDERED TO BE RELEVANT

| Category* | Citation of document, with indication, where appropriate, of the relevant passages | Relevant to claim No. |
|---|---|---|
| X | JP 61-221210 A (Nippon Kayaku Co., Ltd.), 01 October, 1986 (01.10.86), Claims; page 2, lower right column, line 3 to page 3, lower right column, line 13; page 5, lower left column, lines 10 to 14 (Family: none) | 1-8,10-14 |

Form PCT/ISA/210 (continuation of second sheet) (January 2004)